# EUROPEAN PATENT SPECIFICATION

(11) **EP 2 733 386 B1**
(45) Date of publication and mention of the grant of the patent: **07.06.2017**
(21) Application number: 12192856.8
(22) Date of filing: 15.11.2012
(51) Int. Cl.: F16H 39/40, F16H 48/18, F16H 39/34, F16H 39/28, B60K 6/12, B60K 6/10

(54) **Drive system**
Antriebssystem
Système d'entraînement

(43) Date of publication of application: 21.05.2014
(73) Proprietor: CATERPILLAR INC., Peoria IL 61629-6490 (US)
(72) Inventor: Canner, Karl, Swadlincote Derbyshire DE11 9LL (GB)
(74) Representative: BRP Renaud & Partner mbB Rechtsanwälte Patentanwälte Steuerberater

(56) References cited:
- WO-A2-2011/061630
- US-A- 3 332 302
- US-A- 5 655 370
- US-A- 5 904 043

## Description

### Technical Field

This invention relates to the drive systems for vehicles and in particular to drive systems having combined mechanical and hydraulic drive systems. Particularly, this disclosure relates to a drive system which provides several operating modes.

### Background

Vehicles or machines may have drive systems for supply of power to a travelling unit or to work implements. A travelling unit may be wheels or tracks provided on the vehicle or a machine. Work implements may be shears, grapples, hammers, planers, blades, brooms or buckets that are coupled with host machines, such as tractors, excavators, dozers or loaders, to perform work operations like cutting, grabbing or excavating. Work implements may be air-conditioning units or power windows. The worktools may be coupled to an arm, boom or stick mechanism of the host machine via a fixed connection or a quick release connection.

The present invention is directed, at least in part, to improving or overcoming one or more aspects of the prior art system. See, for example, WO 2011/061630 A2. Further prior art is known from US 3 332 302 A.

### Brief Summary of the Invention

In a first aspect, the present invention describes a drive system for a vehicle according to claim 1. In a second aspect, the present invention describes a method of changing transmission mode in a drive system according to claim 7.

### Brief Description of the Drawings

The foregoing and other features and advantages of the present disclosure will be more fully understood from the following description of various embodiments, when read together with the accompanying drawings, in which:
Fig. 1 is a schematic view of a drive system according to the present disclosure;
Fig. 2 is a schematic view of a drive system in a hydraulic supply mode according to the present disclosure;
Fig. 3 is a schematic view of a drive system in a hydrostatic drive mode according to the present disclosure;
Fig. 4 is a schematic view of a drive system in a hydrid drive mode with increased torque according to the present disclosure;
Fig. 5 is a schematic view of a drive system in a direct drive mode according to the present disclosure;
Fig. 6 is a schematic view of a drive system in a hydrid drive mode with increased speed according to the present disclosure;
Fig. 7 is a schematic view of a drive system in a hydrid drive mode with energy storage according to the present disclosure; and
Fig. 8 is a schematic view of a drive system having an embodiment of pumps according to the present disclosure

### Detailed Description

This disclosure generally relates to a drive system **10** for a vehicle or a machine.

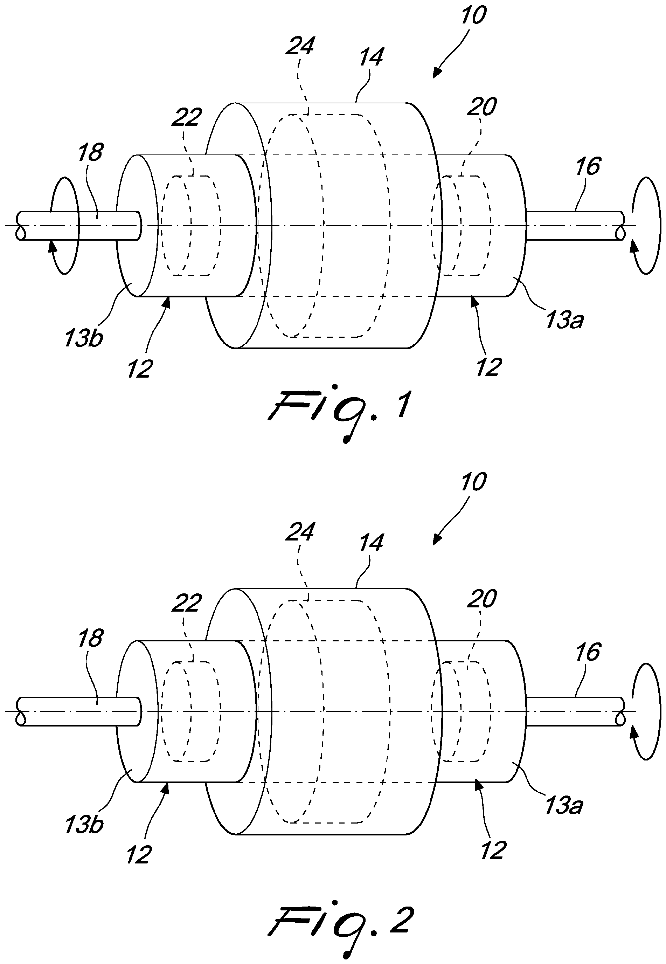

With reference to Fig. 1, the drive system **10** comprises a housing **12.** The housing **12** may be disposed in a journal housing or a bearing arrangement provided in the vehicle or machine. The housing **12** may be movably supported. The housing **12** is rotatably supported. The housing **12** may be rotatably supported in the journal housing or the bearing arrangement.

The housing **12** has a first fluid chamber **20** and a second fluid chamber **22.** The first and second fluid chambers **20, 22** are in communication. The communication between the first and second fluid chambers **20, 22** may enable flow of a fluid, such as hydraulic oil. The communication may be provided by hoses connecting the first and second fluid chambers **20, 22.** The communication may be provided by fluid flow pathways formed within the housing **12** for connecting the first and second fluid chambers **20, 22.** Fluid in the first fluid chamber **20** may flow to the second fluid chamber **22** through controls such as valves. Control of the valves may be provided through mechanical, electrical, electromechanical, or hydraulic communication.

In an embodiment, the housing **12** may be comprised of a first sub-housing **13a** and a second sub-housing **13b.** The first sub-housing **13a** may comprise the first fluid chamber **20.** The second sub-housing **13b** may comprise the second fluid chamber **22.** First sub-housing and second sub-housing **13a, 13b** may be mutually connected through mechanical connections. First sub-housing and second sub-housing **13a, 13b** may be rotatably supported.

The drive system **10** comprises a first pump. The first pump is disposed in the housing **12** for displacement of fluid in the first fluid chamber **20.** The first pump is coupled to an input shaft **16.** The input shaft may be driven by the engine of the vehicle or the machine. The first pump may comprise a fixed or variable displacement pump using pistons, gears, vanes, diaphragms, screws or rotors to provide and remove energy. Additional components of this assembly could be a mechanical brake to provide a lock-up feature.

The drive system **10** comprises a second pump. The second pump is disposed in the housing **12** for displacement of fluid in the second fluid chamber **22.** The second pump is coupled to an output shaft **18.** The output shaft **18** may drive the travelling unit of the vehicle or the machine. The travelling unit may be wheels or tracks. The output shaft **18** may supply power to a driveline for operation of the travelling unit. The second pump may comprise a fixed or variable displacement pump using pistons, gears, vanes, diaphragms, screws or rotors to provide and remove energy. Additional components of this assembly could be a mechanical brake to provide a lock-up feature.

In an embodiment, the housing **12** may be formed as a cylinder where both pumps share a common housing or where the first and second pumps are connected mechanically in a concentric arrangement.

Power produced by the engine of the vehicle or the machine may rotate the input shaft **16.** Rotation of the input shaft **16** may drive the first pump to displace fluid in the first fluid chamber **20.** The displacement of the fluid in the first fluid chamber **20** may be transmitted to the fluid in the second fluid chamber **22.** Fluid displacement in the second fluid chamber **22** may drive the second pump. The second pump may rotate the output shaft **18.** Rotation of the output shaft **18** may drive the travelling unit of the vehicle of machine.

The drive system **10** comprises a body **14.** The body **14** may be disposed in the journal housing or the bearing arrangement provided in the vehicle or machine. The body **14** may be fixedly supported. The body **14** may be fixedly supported in the journal housing or the bearing arrangement. The body **12** may be formed as a container.

The body **14** comprises a third fluid chamber **24.** The third fluid chamber **24** is in communication with the second fluid chamber **22.** The communication between the third and second fluid chambers **24, 22** may enable flow of a fluid, such as hydraulic oil. The communication may be provided by hoses connecting the third and second fluid chambers **24, 22.** The communication may be provided by fluid flow pathways formed within journal housing or a bearing arrangement supporting the housing **12** and the body **14.** Fluid in the third fluid chamber **24** may flow to the second fluid chamber **22** through controls such as valves.

In an embodiment, the third fluid chamber **24** may be connected to the first fluid chamber **20** for flow of high pressure fluid. The high pressure fluid may flow through journals.

In an embodiment, the body **14** may be formed as a cylinder. The body **14** may be disposed concentrically on the housing **12** or arranged on an alternative axis where power is transmitted mechanically to the housing by means such as chains, gears, belts, or friction. The drive system **10** comprises a third pump. The third pump is disposed in the body **14** for displacement of fluid in the third fluid chamber **24.** The third pump is drivingly coupled to housing **12.** The third pump may be driven by the movement of the housing **12.** Rotation of the housing **12** may drive the third pump. Housing **12** may drive the impeller of third pump. The third pump may comprise a fixed or variable displacement pump using pistons, gears, vanes, diaphragms, screws or rotors to provide and remove energy. Additional components of this assembly could be a mechanical brake to provide a lock-up feature.

Third pump is drivingly coupled to the housing **12.** Movement of the housing **12** relative to the journal housing or a bearing arrangement may be dependent on operation the third pump. Rotation of the housing **12** relative to the journal housing or a bearing arrangement may be dependent on the operation of third pump. Movement or rotation of the housing **12** may be permitted if the third pump is allowed to operate. If the third pump is not allowed to operate the housing **12** may not be able to move or rotate.

In an embodiment, the third pump may be drivingly coupled through a belt to the housing **12.** In an embodiment, the third pump may be drivingly coupled through a gear to the housing **12.**

With reference to Fig. 2, the drive system is in a hydraulic supply mode. Power from the engine of the vehicle or machine may be transmitted to the work implements. Engine power may rotate the input shaft **16** to actuate the first pump. Fluid in the first fluid chamber **20** may be displaced through the operation of the first pump. Pressurised fluid from the first fluid chamber **20** may be supplied to the work implements.

In the hydraulic supply mode power may not be transmitted to the travelling unit. The fluid in the second fluid chamber **22** may not be displaced. The output shaft **18** may not be rotated.

The third pump may be locked and may not be permitted to operate. High fluid displacement requirement may be imposed on the third pump. Fluid may be prevented from flowing in the third fluid chamber **24** to induce a hydraulic lock on the third pump. In an embodiment, replacement fluid may be allowed to flow into the third fluid chamber **24** from the first fluid chamber **20.** An external pump could be used to provide cool oil to the system

The housing **12** may be locked so as to prevent movement thereof. Housing **12** may be locked to so as to prevent rotation thereof. Housing **12** may be locked through the coupling with the third pump. Housing **12** may be locked while the third pump is not permitted to operate.

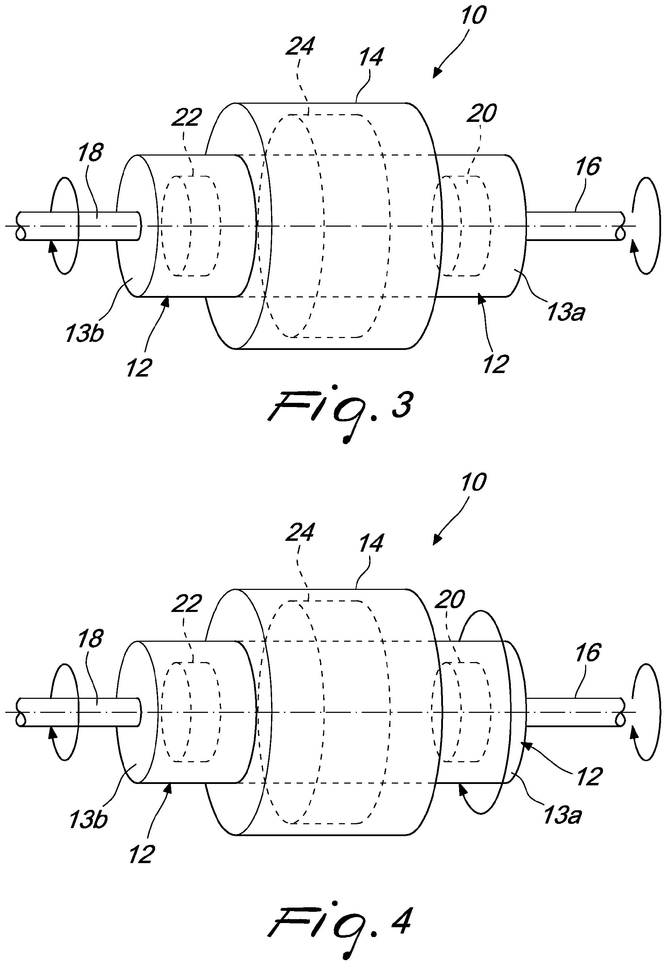

With reference to Fig. 3, the drive system is in a hydrostatic drive mode. Power from the engine of the vehicle or machine may be transmitted through a driveline to the travelling unit. Engine power may rotate the input shaft **16** to actuate the first pump. Fluid in the first fluid chamber **20** may be displaced through the operation of the first pump.

Pressurised fluid from the first fluid chamber **20** may be supplied to the second fluid chamber **22.** Fluid in the first fluid chamber **20** may be allowed to flow to the second fluid chamber **22.** The flow of pressurised fluid into the second fluid chamber **22** may effect operation of the second pump. Operation of the second pump may effect rotation of the output shaft **18** and the transmission of power to the driveline to the travelling unit. The power transmitted to the travelling unit may be sufficient for the vehicle or machine to move at low speeds.

The third pump may be locked and may not be permitted to operate. High fluid displacement requirement may be imposed on the third pump or an integral brake. Fluid may be prevented from flowing in the third fluid chamber **24** to induce a hydraulic lock on the third pump. In an embodiment, replacement fluid may be allowed to flow into the third fluid chamber **24** from the first fluid chamber **20.**

The housing **12** may be locked so as to prevent movement thereof. Housing **12** may be locked to so as to prevent rotation thereof. Housing **12** may be locked through the coupling with the third pump. Housing **12** may be locked while the third pump is not permitted to operate.

With reference to Fig. 4, the drive system is in a hydrid drive mode with increased torque. Power from the engine of the vehicle or machine may be transmitted through a driveline to the travelling unit. Engine power may rotate the input shaft to actuate the first pump. Fluid in the first fluid chamber **20** may be displaced through the operation of the first pump.

Pressurised fluid from the first fluid chamber **20** may be supplied to the second fluid chamber **22.** Pressurised fluid in the first fluid chamber **20** may be allowed to flow to the third fluid chamber **24.** The second pump may be actuated so as to allow the flow of pressurised fluid into the second fluid chamber **24** effects the operation of the second pump. Operation of the second pump may effect rotation of the output shaft **18** and the transmission of power to the driveline to the travelling unit. The power transmitted to the travelling unit may be sufficient for the vehicle or machine to move at low speeds.

The third pump may not be locked and may be permitted to operate. High fluid displacement requirement may not be imposed on the third pump. Fluid may be allowed to flow within the third fluid chamber **24.** Hydraulic power may be supplied through the operation of the first pump or the third pump. Hydraulic power may be supplied to the work implements.

With the third pump being able to operate the restriction of the housing **12** is removed. The housing **12** may be able to move. Housing **12** may be able to rotate. The housing **12** may actuated to move through the displacement of the fluid in the first fluid chamber **20.** The housing **12** may actuated to rotate through the displacement of the fluid in the first fluid chamber. The movement or rotation of the housing **12** may be transmitted to the output shaft **18.** The rotation of the output shaft is effected by the second pump and the housing **12.** Driveline may be powered through the rotation of the output shaft.

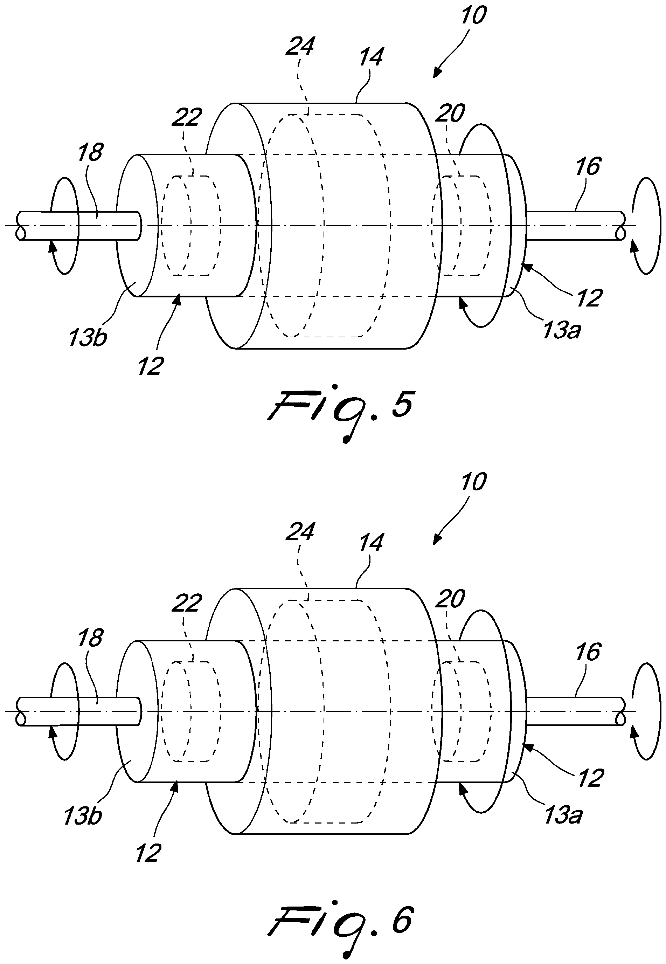

With reference to Fig. 5, the drive system is in a direct drive mode. Power from the engine of the vehicle or machine may be transmitted through a driveline to the travelling unit. Engine power may rotate the input shaft.

The first pump may be locked and may not be permitted to operate. High fluid displacement requirement may be imposed on the first pump. In an embodiment, the swash plates of the first pump may be set at 100% displacement or integral brake applied.

Fluid may be prevented from flowing in the first fluid chamber **20** to induce a hydraulic lock on the first pump. With the first pump locked no hydraulic power may be supplied to the first fluid chamber **20.** Fluid flow from the first fluid chamber **20** to the second fluid chamber **22** may be prevented through a control valve.

The second pump may either be locked or may be operable. If the second pump is locked high fluid displacement requirement may be imposed on the second pump. In an embodiment, the swash plates of the second pump may be set at 100% displacement or integral brake applied. Fluid may be prevented from flowing in the second fluid chamber **20** to induce a hydraulic lock on the second pump.

If the second pump is operable power may not be transmitted to the output shaft **18** from the second pump as fluid in the second fluid chamber **22** is not displaced by fluid from the first fluid chamber **20.**

The third pump may not be locked and may be permitted to operate. Fluid may be allowed to flow within the third fluid chamber **24.** Hydraulic power may be supplied through the operation of the third pump. Hydraulic power may be supplied to the work implements.

With the third pump being able to operate the restriction of the housing **12** is removed. The housing **12** may be able to move. Housing **12** may be able to rotate. The housing **12** may actuated to move through the rotation of the input shaft **16.** With the first pump locked the first pump housing may rotate. The first pump housing may rotate with a ratio of 1:1 with respect to the input shaft. Rotation of the first pump housing may effect movement or rotation of the housing **12.** The housing **12** may rotate at the engine speed.

The movement or rotation of the housing **12** may be transmitted to the output shaft **18.** The output shaft **18** may rotate at a ratio of 1:1 with respect to the input shaft **16.** The driveline may be powered through the rotation of the output shaft **18.**

With reference to Fig. 6, the drive system is in a hydrid drive mode with increased speed. Power from the engine of the vehicle or machine may be transmitted through a driveline to the travelling unit. Engine power may rotate the input shaft **16.**

The first pump may be locked and may not be permitted to operate. High fluid displacement requirement may be imposed on the first pump. In an embodiment, the swash plates of the first pump may be set at 100% displacement or integral brake applied.

Fluid may be prevented from flowing in the first fluid chamber **20** to induce a hydraulic lock on the first pump. With the first pump locked no hydraulic power may be supplied to the first fluid chamber **20.** Fluid flow from the first fluid chamber **20** to the second fluid chamber **22** may be prevented through a control valve.

The third pump may not be locked and may be permitted to operate. Hydraulic power may be supplied through the operation of the third pump. Hydraulic power may be supplied to the second fluid chamber **22.**

Pressurised fluid from the third fluid chamber **24** may be supplied to the second fluid chamber **22.** Fluid in the third fluid chamber **24** may be allowed to flow to the second fluid chamber **22** through a control valve. The flow of pressurised fluid into the second fluid chamber **22** may effect operation of the second pump. Operation of the second pump may effect rotation of the output shaft **18** and the transmission of power to the driveline to the travelling unit.

With the third pump being able to operate the restriction of the housing **12** is removed. The housing **12** may be able to move. Housing **12** may be able to rotate. The housing **12** may actuated to move through the rotation of the input shaft **16.** With the first pump locked the first pump housing may rotate. The first pump housing may rotate with a ratio of 1:1 with respect to the input shaft **16.** Rotation of the first pump housing may effect movement or rotation of the housing **12.** The housing **12** may rotate at the engine speed.

The movement or rotation of the housing **12** may be transmitted to the output shaft. The output shaft may be rotated by the action of the housing **12** and the second pump. The output shaft **18** may rotate at a greater speed relative to the input shaft **16.** The driveline may be powered through the rotation of the output shaft **18.**

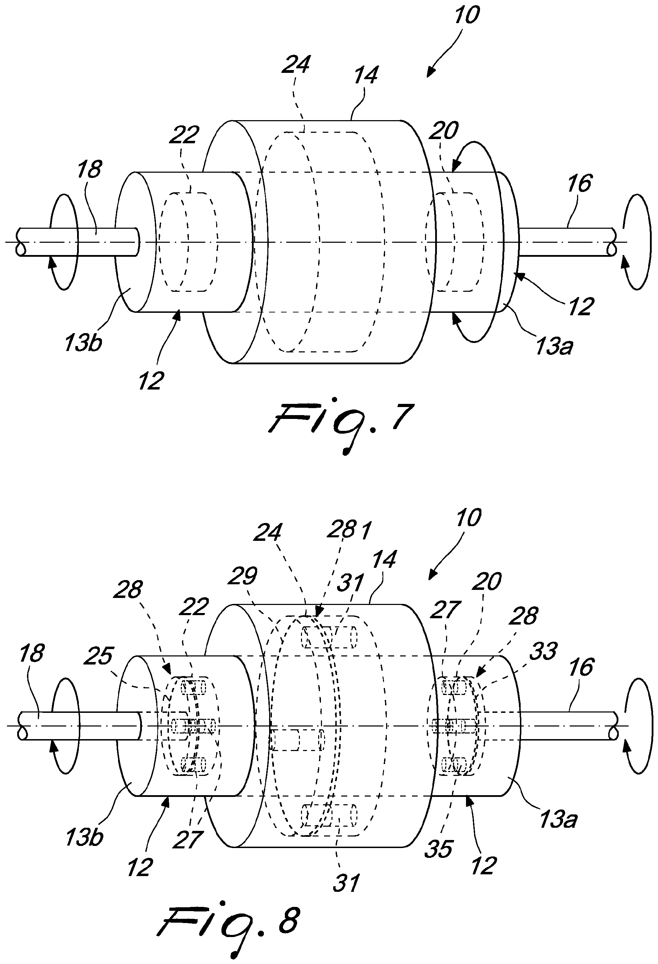

With reference to Fig. 7, the drive system is in a hydrid drive mode with energy storage. Power from the engine of the vehicle or machine may be transmitted through a driveline to the travelling unit. Engine power may rotate the input shaft **16.**

The first pump may be set to zero displacement. In an embodiment, the swash plates may be set to zero swash. The energy loss to engine may be limited.

The second pump may be set to displace fluid in the second fluid chamber. The second pump may be connected to the output shaft **18** and may effect a deceleration in the machine. The second pump may collect the energy from the output shaft **18.** The pressurised fluid from the second fluid chamber **22** may be supplied to the third fluid chamber **24.** The flow of pressurised fluid into the third fluid chamber **24** may effect operation of the third pump. The operation of the third pump may effect rotation of the housing **12.** Housing **12** may be accelerated by the operation of the second pump causing pressurised fluid to be supplied to the third fluid chamber during machine deceleration.

The third pump may not be locked and may be permitted to operate. Fluid may be allowed to flow within the third fluid chamber **24.** Hydraulic power may be supplied through the operation of the third pump. Hydraulic power may be supplied to the work implements.

With the third pump being able to operate the restriction of the housing **12** is removed. The housing **12** may be able to move. Housing **12** may be able to rotate. With the first pump at very low displacement the first pump housing may rotate. The first pump housing rotation speed may not be related to the speed of the input shaft **16.** In an embodiment, housing **12** may be rotatable in a direction of rotation of the input shaft **16** and the output shaft **18.** In an embodiment, housing **12** may be rotatable in a direction of rotation counter to direction of rotation of the input shaft **16** and the output shaft **18.**

Vehicles and machines may spend large periods of time changing direction over short distances. This mode may enable the energy produced in the constant change of directions over short distances. The energy may be captured as rotational inertia through the acceleration of the housing **12** or the displacement of fluid in accumulators. The stored energy may be discharged as hydraulic energy or transmitted to the driveline.

The drive system **10** may have an acceleration sequence from the initiation of the hydrostatic drive mode to the hybrid drive with increased speed. The hybrid drive mode with increased torque may be activated after activation of the hydrostatic drive mode. The direct drive mode may be activated after the activation of the hybrid drive mode with increased torque. The hydrid drive mode with energy storage may be activated at any point in the sequence. At deactivation of the hydrid drive mode the acceleration sequence may be resumed at the corresponding speed and torque.

Fig. 8 schematically illustrates a drive system **10** with an embodiment of first, second and third pumps **26, 28, 30.** The first, second and third pumps **26, 28, 30** may be variable displacement pumps comprising swash plates and pistons. The first, second and third pumps **26, 28, 30** may each comprise a swash plate and a plurality of pistons. First pump **26** may have a swash plate **25** and a plurality of pistons **27.** Second pump **28** may have a swash plate **29** and a plurality of pistons **31.** Third pump **30** may have a swash plate **33** and a plurality of pistons **35.**

### Industrial Applicability

This disclosure describes a drive system **10** for a vehicle or a machine. The drive system **10** may replace an implement pump in a vehicle or machine. Drive system **10** may replace a gearbox in a vehicle or a machine. Drive system **10** may replace a torque converter in a vehicle or a machine.

The drive system **10** may enable energy to be collected mechanically when the vehicle or machine changes direction of travel. The change in the direction of travel may change the direction of operation of the pumps. Power may be stored as inertia during cyclic operations, such as loader operations. The energy may be discharged when the vehicle or machine accelerates or as hydraulic power for work implements.

The drive system **10** may provide a machine or vehicle with high torque while the machine operates on a work site and energy capture while undergoing repetitive work cycles. Drive system **10** may provide a seamless transition through the operating modes to supply efficient transfer of power to meet the speed and torque requirements of the machine. The drive system **10** may provide a vehicle or machine with a system to travel on the road with minimal losses, reducing the amount of power required by the vehicle or machine.

Accordingly, this disclosure includes all modifications and equivalents of the subject matter recited in the claims appended hereto.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

Scope of the invention is thus indicated by the appended claims.

## Claims

1. A drive system (10) for a vehicle, the drive system (10) comprising:
a rotatable housing (12) having a first fluid chamber (20) and a second fluid chamber (22), the first fluid chamber (20) being in communication with the second fluid chamber (22);
a first pump (26) disposed in the housing (12) for displacement of fluid in the first chamber (20), the first pump (26) being coupled to an input shaft (16);
a second pump (28) disposed in the housing (12) for displacement of fluid in the second chamber (22), the second pump (28) being coupled to an output shaft (18);
a body (14) having a third fluid chamber (24) wherein the third fluid chamber (24) is in communication with the second fluid chamber (22); and
a third pump (30) disposed in the body (14) for displacement of fluid in the third fluid chamber (24) wherein the third pump (26) is drivingly coupled to the housing (12).

2. The drive system (10) of claim 1 wherein the housing (12) is comprised of a first sub-housing (13a) having the first fluid chamber (20) and a second sub-housing (13b) having the second fluid chamber (22).

3. The drive system (10) of claim 1 or 2 wherein the first and second pumps (26, 28) are variable displacement pumps.

4. The drive system (10) of claim 1, 2 or 3 wherein the housing (12) is a cylinder and the body (14) is cylinder disposed concentrically on the housing (12).

5. The drive system (10) of any one of preceding claims wherein the third pump (30) is drivingly coupled through a belt to the housing (12).

6. The drive system (10) of any one of preceding claims 1 to 4 wherein the third pump (30) is drivingly coupled through a gear to the housing (12).

7. A method of changing transmission mode in a drive system (10) comprising:
a rotatable housing (12) having a first fluid chamber (20) and a second fluid chamber (22), the first fluid chamber (20) being in communication with the second fluid chamber (22);
a first pump (26) disposed in the housing (12) for displacement of fluid in the first fluid chamber (20), the first pump (26) being coupled to an input shaft (16);
a second pump (28) disposed in the housing (20) for displacement of fluid in the second fluid chamber (22), the second pump (28) being coupled to an output shaft (18);
a body (14) having a third fluid chamber (24) wherein the third fluid chamber (24) is in communication with the second fluid chamber (22); and
a third pump (30) disposed in the body (14) for displacement of fluid in the third fluid chamber (24) wherein the third pump (30) is drivingly coupled to the housing (12), the method comprising the steps of:
rotating the input shaft (16);
actuating the first pump (26);
actuating the second pump (28); and
actuating the third pump (30).

8. The method of changing transmission mode of claim 7 wherein the first pump (26) is actuated to operate; the second pump (28) is actuated to operate; the third pump (30) is actuated to lock; and further comprising the step of permitting fluid to flow from the first fluid chamber (20) to a work implement.

9. The method of changing transmission mode of claim 7 wherein the first pump (26) is actuated to operate; the second pump (28) is actuated to operate; the third pump (30) is actuated to lock; and further comprising the step of permitting fluid to flow from the first fluid chamber (20) to the second fluid chamber (22).

10. The method of changing transmission mode of claim 7 wherein the first pump (26) is actuated to operate; the second pump (28) is actuated to operate; the third pump is actuated to operate (30); and further comprising the step of permitting fluid to flow from the first fluid chamber (20) to the second fluid chamber (22).

11. The method of changing transmission mode of claim 7 wherein the first pump is actuated to lock; the second pump is actuated to operate or lock; the third pump is actuated to operate; and further comprising the step of restricting fluid to flow from the first fluid chamber (20) to the second fluid chamber (22).

12. The method of changing transmission mode of claim 7 wherein the first pump (26) is actuated to lock; the second pump (28) is actuated to operate or lock; the third pump (30) is actuated to operate; and further comprising the steps of restricting fluid to flow from the first fluid chamber (20) to the second fluid chamber (22) and permitting fluid flow from the third fluid chamber (24) to the second fluid chamber (22).

13. The method of changing transmission mode of claim 7 wherein the first pump (26) is actuated to operate and having zero displacement; the second pump (28) is actuated to operate; the third pump (30) is actuated to operate; and further comprising the steps of restricting fluid to flow from the first fluid chamber (20) to the second fluid chamber (22) and permitting fluid flow from the second fluid chamber (22) to the third fluid chamber (24).

## Patentansprüche

1. Antriebssystem (10) für ein Fahrzeug, das Antriebssystem (10) umfassend:
ein drehbares Gehäuse (12) mit einer ersten Fluidkammer (20) und einer zweiten Fluidkammer (22), wobei die erste Fluidkammer (20) sich in Kommunikation mit der zweiten Fluidkammer (22) befindet;
eine erste Pumpe (26), angeordnet in dem Gehäuse (12) zur Verdrängung von Fluid in der ersten Kammer (20), wobei die erste Pumpe (26) mit einer Eingangswelle (16) gekoppelt ist;
eine zweite Pumpe (28), angeordnet in dem Gehäuse (12) zur Verdrängung von Fluid in der zweiten Kammer (22), wobei die zweite Pumpe (28) mit einer Ausgangswelle (18) gekoppelt ist;
einen Körper (14) mit einer dritten Fluidkammer (24), wobei die dritte Fluidkammer (24) sich in Kommunikation mit der zweiten Fluidkammer (22) befindet; und
eine dritte Pumpe (30), angeordnet in dem Körper (14) zur Verdrängung von Fluid in der dritten Fluidkammer (24), wobei die dritte Pumpe (26) antriebsmäßig mit dem Gehäuse (12) gekoppelt ist.

2. Antriebssystem (10) nach Anspruch 1, wobei das Gehäuse (12) aus einem ersten Teilgehäuse (13a) mit der ersten Fluidkammer (20) und einem zweiten Teilgehäuse (13b) mit der zweiten Fluidkammer (22) besteht.

3. Antriebssystem (10) nach Anspruch 1 oder 2, wobei die erste und die zweite Pumpe (26, 28) Pumpen mit variabler Verdrängung sind.

4. Antriebssystem (10) nach Anspruch 1, 2 oder 3, wobei das Gehäuse (12) ein Zylinder ist und der Körper (14) ein Zylinder ist, der konzentrisch auf dem Gehäuse (12) angeordnet ist.

5. Antriebssystem (10) nach einem der vorstehenden Ansprüche, wobei die dritte Pumpe (30) antriebsmäßig über einen Riemen mit dem Gehäuse (12) gekoppelt ist.

6. Antriebssystem (10) nach einem der vorstehenden Ansprüche 1 bis 4, wobei die dritte Pumpe (30) antriebsmäßig über ein Getriebe mit dem Gehäuse (12) gekoppelt ist.

7. Verfahren des Änderns eines Übertragungsmodus in einem Antriebssystem (10), umfassend:
ein drehbares Gehäuse (12) mit einer ersten Fluidkammer (20) und einer zweiten Fluidkammer (22), wobei die erste Fluidkammer (20) sich in Kommunikation mit der zweiten Fluidkammer (22) befindet;
eine erste Pumpe (26), angeordnet in dem Gehäuse (12) zur Verdrängung von Fluid in der ersten Kammer (20), wobei die erste Pumpe (26) mit einer Eingangswelle (16) gekoppelt ist;
eine zweite Pumpe (28), angeordnet in dem Gehäuse (20) zur Verdrängung von Fluid in der zweiten Kammer (22), wobei die zweite Pumpe (28) mit einer Ausgangswelle (18) gekoppelt ist;
einen Körper (14) mit einer dritten Fluidkammer (24), wobei die dritte Fluidkammer (24) sich in Kommunikation mit der zweiten Fluidkammer (22) befindet; und
eine dritte Pumpe (30), angeordnet in dem Körper (14) zur Verdrängung von Fluid in der dritten Fluidkammer (24), wobei die dritte Pumpe (30) antriebsmäßig mit dem Gehäuse (12) gekoppelt ist,
das Verfahren umfassend die Schritte:
Drehen der Eingangswelle (16);
Betätigen der ersten Pumpe (26);
Betätigen der zweiten Pumpe (28); und
Betätigen der dritten Pumpe (30).

8. Verfahren des Änderns eines Übertragungsmodus nach Anspruch 7, wobei
die erste Pumpe (26) betätigt wird, um zu arbeiten;
die zweite Pumpe (28) betätigt wird, um zu arbeiten;
die dritte Pumpe (30) betätigt wird, um zu verriegeln; und weiter umfassend den Schritt
Ermöglichen, dass Fluid von der ersten Fluidkammer (20) zu einem Arbeitsgerät fließt.

9. Verfahren des Änderns eines Übertragungsmodus nach Anspruch 7, wobei
die erste Pumpe (26) betätigt wird, um zu arbeiten;
die zweite Pumpe (28) betätigt wird, um zu arbeiten;
die dritte Pumpe (30) betätigt wird, um zu verriegeln; und weiter umfassend den Schritt
Ermöglichen, dass Fluid von der ersten Fluidkammer (20) zu der zweiten Fluidkammer (22) fließt.

10. Verfahren des Änderns eines Übertragungsmodus nach Anspruch 7, wobei
die erste Pumpe (26) betätigt wird, um zu arbeiten;
die zweite Pumpe (28) betätigt wird, um zu arbeiten;
die dritte Pumpe (30) betätigt wird, um zu arbeiten; und weiter umfassend den Schritt
Ermöglichen, dass Fluid von der ersten Fluidkammer (20) zu der zweiten Fluidkammer (22) fließt.

11. Verfahren des Änderns eines Übertragungsmodus nach Anspruch 7, wobei
die erste Pumpe betätigt wird, um zu verriegeln;
die zweite Pumpe betätigt wird, um zu verriegeln;
die dritte Pumpe betätigt wird, um zu arbeiten; und weiter umfassend den Schritt
Beschränken, dass Fluid von der ersten Fluidkammer (20) zu der zweiten Fluidkammer (22) fließt.

12. Verfahren des Änderns eines Übertragungsmodus nach Anspruch 7, wobei
die erste Pumpe (26) betätigt wird, um zu verriegeln;
die zweite Pumpe (28) betätigt wird, um zu verriegeln;
die dritte Pumpe (30) betätigt wird, um zu arbeiten; und weiter umfassend die Schritte
Beschränken, dass Fluid von der ersten Fluidkammer (20) zu der zweiten Fluidkammer (22) fließt, und
Ermöglichen, dass Fluid von der dritten Fluidkammer (24) zu der zweiten Fluidkammer (22) fließt.

13. Verfahren des Änderns eines Übertragungsmodus nach Anspruch 7, wobei
die erste Pumpe (26) betätigt wird, um zu arbeiten, und keine Verdrängung aufweist;
die zweite Pumpe (28) betätigt wird, um zu arbeiten;
die dritte Pumpe (30) betätigt wird, um zu arbeiten; und weiter umfassend die Schritte
Beschränken, dass Fluid von der ersten Fluidkammer (20) zu der zweiten Fluidkammer (22) fließt, und
Ermöglichen, dass Fluid von der zweiten Fluidkammer (22) zu der dritten Fluidkammer (24) fließt.

## Revendications

1. Système d'entraînement (10) pour un véhicule, le système d'entraînement (10) comprenant :
un boîtier rotatif (12) ayant une première chambre de fluide (20) et une deuxième chambre de fluide (22), la première chambre de fluide (20) étant en communication avec la deuxième chambre de fluide (22) ;
une première pompe (26) disposée dans le boîtier (12) pour le déplacement de fluide dans la première chambre (20), la première pompe (26) étant couplée à un arbre d'entrée (16) ;
une deuxième pompe (28) disposée dans le boîtier (12) pour le déplacement de fluide dans la deuxième chambre (22), la deuxième pompe (28) étant couplée à un arbre de sortie (18) ;
un corps (14) ayant une troisième chambre de fluide (24), dans lequel la troisième chambre de fluide (24) est en communication avec la deuxième chambre de fluide (22) ; et
une troisième pompe (30) disposée dans le corps (14) pour le déplacement d'un fluide dans la troisième chambre de fluide (24), dans lequel la troisième pompe (26) est couplée à entraînement au boîtier (12).

2. Système d'entraînement (10) selon la revendication 1, dans lequel le boîtier (12) est constitué d'un premier sous-boîtier (13a) ayant la première chambre de fluide (20) et un second sous-boîtier (13b) ayant la deuxième chambre de fluide (22).

3. Système d'entraînement (10) selon la revendication 1 ou 2, dans lequel la première et la deuxième pompe (26, 28) sont des pompes à déplacement variable.

4. Système d'entraînement (10) selon la revendication 1, 2 ou 3, dans lequel le boîtier (12) est un cylindre et le corps (14) est un cylindre disposé concentriquement sur le boîtier (12).

5. Système d'entraînement (10) selon l'une quelconque des revendications précédentes, dans lequel la troisième pompe (30) est couplée à entraînement au boîtier (12) via une courroie.

6. Système d'entraînement (10) selon l'une quelconque des revendications 1 à 4, dans lequel la troisième pompe (30) est couplée à entraînement au boîtier (12) via un engrenage.

7. Procédé de changement de mode de transmission dans un système d'entraînement (10) comprenant :
un boîtier rotatif (12) ayant une première chambre de fluide (20) et une deuxième chambre de fluide (22), la première chambre de fluide (20) étant en communication avec la deuxième chambre de fluide (22) ;
une première pompe (26) disposée dans le boîtier (12) pour le déplacement de fluide dans la première chambre de fluide (20), la première pompe (26) étant couplée à un arbre d'entrée (16) ;
une deuxième pompe (28) disposée dans le boîtier (20) pour le déplacement de fluide dans la deuxième chambre de fluide (22), la deuxième pompe (28) étant couplée à un arbre de sortie (18) ;
un corps (14) ayant une troisième chambre de fluide (24), dans lequel la troisième chambre de fluide (24) est en communication avec la deuxième chambre de fluide (22) ; et
une troisième pompe (30) disposée dans le corps (14) pour le déplacement de fluide dans la troisième chambre de fluide (24), dans lequel la troisième pompe (30) est couplée à entraînement au boîtier (12), le procédé comprenant les étapes consistant à :
faire tourner l'arbre d'entrée (16) ;
actionner la première pompe (26) ;
actionner la deuxième pompe (28) ; et
actionner la troisième pompe (30).

8. Procédé de changement de mode de transmission de la revendication 7, dans lequel la première pompe (26) est actionnée pour fonctionner ; la deuxième pompe (28) est actionnée pour fonctionner ; la troisième pompe (30) est actionnée pour verrouiller ; et comprenant en outre l'étape permettant à du fluide de s'écouler de la première chambre de fluide (20) à un outil de travail.

9. Procédé de changement de mode de transmission de la revendication 7, dans lequel la première pompe (26) est actionnée pour fonctionner ; la deuxième pompe (28) est actionnée pour fonctionner ; la troisième pompe (30) est actionnée pour verrouiller ; et comprenant en outre l'étape permettant à du fluide de s'écouler de la première chambre de fluide (20) à la deuxième chambre de fluide (22).

10. Procédé de changement de mode de transmission de la revendication 7, dans lequel la première pompe (26) est actionnée pour fonctionner ; la deuxième pompe (28) est actionnée pour fonctionner ; la troisième pompe est actionnée pour fonctionner (30) ; et comprenant en outre l'étape permettant à du fluide de s'écouler de la première chambre de fluide (20) à la deuxième chambre de fluide (22).

11. Procédé de changement de mode de transmission selon la revendication 7, dans lequel la première pompe est actionnée pour verrouiller; la deuxième pompe est actionnée pour fonctionner ou verrouiller; la troisième pompe est actionnée pour fonctionner ; et comprenant en outre l'étape de restriction de l'écoulement du fluide de la première chambre de fluide (20) à la deuxième chambre de fluide (22).

12. Procédé de changement de mode de transmission de la revendication 7, dans lequel la première pompe (26) est actionnée pour verrouiller ; la deuxième pompe (28) est actionnée pour fonctionner ou verrouiller ; la troisième pompe (30) est actionnée pour fonctionner ; et comprenant en outre les étapes de restriction de l'écoulement du fluide de la première chambre de fluide (20) à la deuxième chambre de fluide (22) et d'autorisation de l'écoulement du fluide de la troisième chambre de fluide (24) à la deuxième chambre de fluide (22).

13. Procédé de changement de mode de transmission de la revendication 7, dans lequel la première pompe (26) est actionnée pour fonctionner et présente un déplacement nul ; la deuxième pompe (28) est actionnée pour fonctionner ; la troisième pompe (30) est actionnée pour fonctionner; et comprenant en outre les étapes de restriction de l'écoulement du fluide de la première chambre de fluide (20) à la deuxième chambre de fluide (22) et d'autorisation de l'écoulement du fluide de la deuxième chambre de fluide (22) à la troisième chambre de fluide (24).
